# EUROPÄISCHE PATENTSCHRIFT

(11) **EP 0 820 375 B1**
(45) Veröffentlichungstag und Bekanntmachung des Hinweises auf die Patenterteilung: **19.01.2000**
(21) Anmeldenummer: 96905583.9
(22) Anmeldetag: 19.03.1996
(51) Int. Cl.: B29C 47/58, B29B 17/00

(54) **VORRICHTUNG ZUM AUFBEREITEN THERMOPLASTISCHEN KUNSTSTOFFGUTES**
DEVICE FOR PREPARING THERMOPLASTIC MATERIAL
DISPOSITIF DE PREPARATION DE MATIERES THERMOPLASTIQUES

(30) Priorität: 11.04.1995 AT 62895
(43) Veröffentlichungstag der Anmeldung: 28.01.1998
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dr. Dipl.-Ing.
(86) Internationale Anmeldenummer: AT9600053
(87) Internationale Veröffentlichungsnummer: WO9632242

(56) Entgegenhaltungen:
- EP-A- 0 071 159
- EP-A- 0 100 945
- EP-A- 0 303 929
- WO-A-88/02684
- WO-A-95/17293
- DE-A- 2 112 306
- DE-A- 2 351 328

## Beschreibung

Die Erfindung bezieht sich auf eine Vorrichtung zum Aufbereiten thermoplastischen Kunststoffgutes, mit einem Behälter zur Aufnahme des zu bearbeitenden Kunststoffgutes, in welchem Behälter eine Einrichtung mit zumindest einem umlaufenden Werkzeug vorhanden ist, die das Kunststoffgut in Richtung zu einer Austragsöffnung des Behälters derart fördert, daß auf das Kunststoffgut eine in Achsrichtung dieser Austragsöffnung gerichtete, durch jeweils nachgedrücktes Kunststoffgut übertragene Stopfkraftkomponente ausgeübt wird, welche Austragsöffnung zu einer in der Seitenwand des Gehäuses einer Schnecke angeordneten Eintrittsöffnung für das Kunststoffgut führt, sodaß das Kunststoffgut von der Seite zwischen die Gänge der Schnecke gedrückt wird, wobei an der Innenmantelfläche des Gehäuses der Schnecke im Bereich der Eintrittsöffnung eine taschenartige Erweiterung vorgesehen ist, die einen zusätzlichen Freiraum zur Aufnahme von Kunststoffgut bildet, der durch das eingestopfte Kunststoffgut gefüllt wird, welche Erweiterung an jenem Rand der Eintrittsöffnung, an welchem die Drehrichtung der Schnecke zum Behälter gerichtet ist, durch einen verstellbaren Wandteil begrenzt ist, durch welchen die Erweiterung zumindest teilweise gegen den Behälter abschließbar ist.

Eine derartige Vorrichtung ist Gegenstand einer älteren, nicht vorveröffentlichten Konstruktion derselben Anmelder. Diese Konstruktion hat den Vorteil, daß auch Kunststoffgut, welches nicht immer die gleiche Beschaffenheit hat, verläßlich von der Schnecke erfaßt wird, da die Stopfwirkung des umlaufenden Werkzeuges laufend dafür sorgt, daß genügend Kunststoffgut von der Seite zwischen die einzelnen Gänge der um ihre Längsachse rotierenden Schnecke gedrückt wird. An sich bringt dies zwar die Gefahr, daß der Förderwirkungsgrad der Schnecke zu groß wird und dadurch Überlastungen des Schneckenantriebes auftreten, jedoch ist diese Gefahr dadurch vermeidbar, daß der verstellbare Wandteil relativ zur Schnecke zurückgezogen wird, so daß ein Teil des von der Schnecke erfaßten Kunststoffgutes wieder zurück in den Behälter gelangt. Auf diese Weise ist es möglich, den Förderwirkungsgrad der Schnecke an die vorliegenden Verhältnisse anzupassen.

Des weiteren ist aus der EP-A-0071159 eine Vorrichtung zum Verarbeiten von Kunststoffen bekannt. Diese Vorrichtung umfaßt eine Einrichtung zum Fördern des Kunststoffs in den Extruder, eine taschenförmige Erweiterung im Schneckengehäuse und Rippen und Nuten im Anschluß an die Erweiterung. Ein verstellbarer Wandteil zum Regulieren des Materialdurchsatzes ist nicht vorgesehen.

Die vorliegende Erfindung setzt sich zur Aufgabe, eine Vorrichtung der eingangs genannten Art noch weiter zu verbessern, insbesondere hinsichtlich des Einzuges lockeren Materiales in das Schneckengehäuse und hinsichtlich der Herstellungskosten. Bei der zuvor erwähnten älteren Konstruktion liegen nämlich außer dem verstellbaren Wandteil auch noch andere, gegebenenfalls verstellbare, Wandteile im Bereiche der Eintrittsöffnung des Schneckengehäuses vor und es hat sich gezeigt, daß der die Eintrittsöffnung aufweisende Bereich des Schneckengehäuses in seiner Herstellung teuer ist, da dieser Bauteil ja spanabhebend hergestellt werden muß. Die Erfindung verbessert nun die erwähnte Konstruktion hinsichtlich des Einzuges lockeren Materiales in das Schneckengehäuse und hinsichtlich der Herstellungskosten dadurch, daß die Erweiterung zumindest in einem an sie in Förderrichtung der Schnecke anschließenden Bereich des Schneckengehäuses in mehrere Nuten übergeht, die in diesem Bereich eine sich bis zum Schneckendurchmesser verringemde Tiefe haben und in diesem Bereich durch relativ zur Mantelwand der Erweiterung des Schneckengehäuses gegen die Schnecke vorstehende starre Rippen voneinander getrennt sind, wobei jede dieser Nuten für das Kunststoffgut einen Freiraum bildet, dessen Längsrichtung eine in Achsrichtung des Schneckengehäuses verlaufende wesentliche Komponente hat.

Die die einzelnen Nuten begrenzenden Rippen bilden für das von der Schnecke im Bereich der Eintrittsöffnung des Schneckengehäuses erfaßte Kunstoffgut Widerstände, welche verhindem, daß das erfaßte Kunststoffgut sich nur mit der Schnecke mitdreht, jedoch nicht wesentlich in Achsrichtung der Schnecke weiterbefördert wird. Dadurch, daß nun die Rippen der eingangs erwähnten älteren Konstruktion nicht mehr alle im Bereich der Eintrittsöffnung für das Kunststoffgut angeordnet sein müssen, wird die Bearbeitung des die Eintrittsöffnung aufweisenden Abschnittes des Schneckengehäuses erleichtert. Die die Nuten begrenzenden Rippen können zwar im Extremfall bis in den Bereich der Eintrittsöffnung ragen, erstrecken sich jedoch nicht über deren gesamte, in axialer Richtung der Schnecke gemessene Länge. Die Herstellung der Nuten ist daher selbst in einem solchen Fall auf Maschinen möglich, die nur einen begrenzten Arbeitsbereich haben.

Die Anordnung von Nuten im Bereich der Einzugsöffnung eines Schneckengehäuses und in einem daran in axialer Richtung der Schnecke anschließenden Bereich des Schneckengehäuses ist bekannt (DE-A 2 351 328). Dort bilden die Nuten jedoch weitere Vertiefungen der Erweiterung des Schneckengehäuses, die zwischen den Nuten verbleibenden Rippen stehen somit nicht von der Wand der Erweiterung gegen die Schnecke vor. Eine solche Ausbildung würde daher bei der erfindungsgemäßen Konstruktion nur unvollkommen wirken.

Im Rahmen der Erfindung besteht eine bevorzugte Ausführungsform darin, daß sich die Rippen in radialer Richtung des Schneckengehäuses bis zum Umfang der Schneckengänge erstrecken. Dadurch wird am besten verhindert, daß das in die Eintrittsöffnung hineingestopfte und von der Schnecke erfaßte Kunststoffgut sich nur mit der Schnecke mitdreht, aber nicht in Axialrichtung gefördert wird.

Vorzugsweise sind gemäß einer Weiterbildung der Erfindung die Nuten nur in einem an die Eintrittsöffnung anschließenden Bereich des Schneckengehäuses vorgesehen, erstrecken sich also nicht in den Bereich der Eintrittsöffnung. Dies erleichtert die Herstellung des letzteren Bereiches wesentlich und ermöglicht es, gemäß einer bevorzugten Ausführungsform der Erfindung die Nuten in einer einen gesonderten Abschnitt des Schneckengehäuses bildenden Büchse vorzusehen, welche unverdrehbar, vorzugsweise leicht auswechselbar, in das restliche Schneckengehäuse eingebaut ist. Hiedurch wird dem Umstand in besonders günstiger Weise Rechnung getragen, daß gerade jene Konstruktionsteile, welche das Mitdrehen des von der Schnecke erfaßten Kunststoffgutes verhindern, also die Rippen, bei der Verarbeitung von Kunststoffgut, welches abrasive Verschmutzungen enthält, insbesondere aus Abfallmaterial, einem starken Verschleiß unterworfen sind. Eine solche gesonderte Büchse löst dieses Problem in kostengünstiger Weise, insbesondere bei leichter Auswechselbarkeit der Büchse. Andemfalls müßte bei nicht mehr vertretbarem Verschleiß der die Taschen bzw. Nuten begrenzenden Rippen der gesamte Einzugsteil des Schneckengehäuses ausgewechselt werden, was erhebliche Kosten verursachen würde. Zwar unterliegt auch eine gesonderte Büchse, welche die Nuten bzw. die sie begrenzenden Rippen aufweist, einem starken Verschleiß, jedoch kann einerseits diese Büchse aufgrund ihrer einfachen Geometrie verhältnismäßig kostengünstig hergestellt werden, so daß sie einen Verschleißteil bildet, der bei Bedarf ausgewechselt wird. Die einfache Herstellbarkeit ermöglicht es auch, die Büchse aus verschleißfestem Material auszubilden, insbesondere aus Hartmetall.

Gemäß einer Weiterbildung der Erfindung ist im Bereich der Einzugsöffnung nur eine einzige taschenartige Erweiterung, vorzugsweise mit konstanter Tiefe, vorgesehen, die sich über den gesamten Umfang der Schnecke mit Ausnahme der Eintrittsöffnung erstreckt und sich in mehreren Nuten fortsetzt. Versuche haben nämlich gezeigt, daß die Regelung des Förderwirkungsgrades der Schnecke in ausreichendem Maße möglich ist, wenn nur eine einzige verstellbare äußerste Rippe unmittelbar neben der Einzugsöffnung angeordnet ist. Hiedurch ergibt sich eine weitere Vereinfachung der Herstellung des die Eintrittsöffnung aufweisenden Schneckengehäuseabschnittes.

Im Betrieb wird das erfaßte Kunststoffgut durch die sich verringernde Tiefe der Nuten allmählich zwischen die Schneckengänge hineingedrückt. Es ist hiebei die Anordnung vorzugsweise so getroffen, daß die Tiefe der Nuten in Förderrichtung der Schnecke kontinuierlich abnimmt, um Stauungen des Materiales zu vermeiden, vorzugsweise ist der Boden zumindest einer Nut nach einer Kegelmantelfläche geformt.

Es empfiehlt sich im Rahmen der Erfindung, die in Axialrichtung der Schnecke gemessene Länge der Nuten kürzer zu bemessen als die in gleicher Richtung gemessene Weite der Eintrittsöffnung, wobei vorzugsweise die so gemessene Nutenlänge das 0,5-fache bis 3-fache des Schneckendurchmessers beträgt. Je kürzer die Nuten, insbesondere in einem gesonderten Gehäusebauteil, sind, desto einfacher läßt sich dieser Bauteil herstellen.

Weitere Ausgestaltungen der Erfindung sind in den abhängigen Ansprüchen definiert.

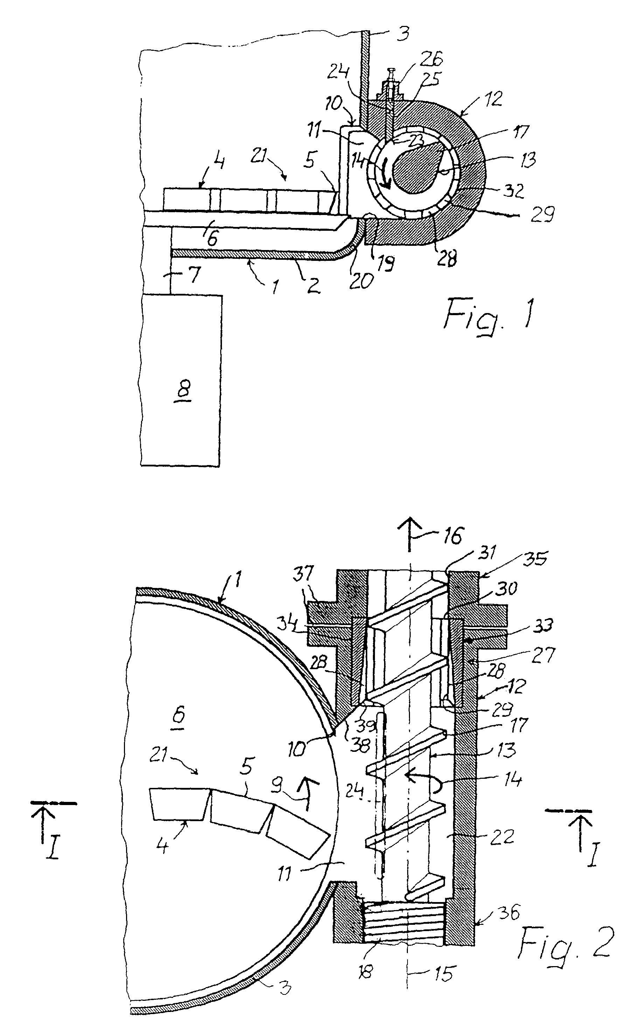

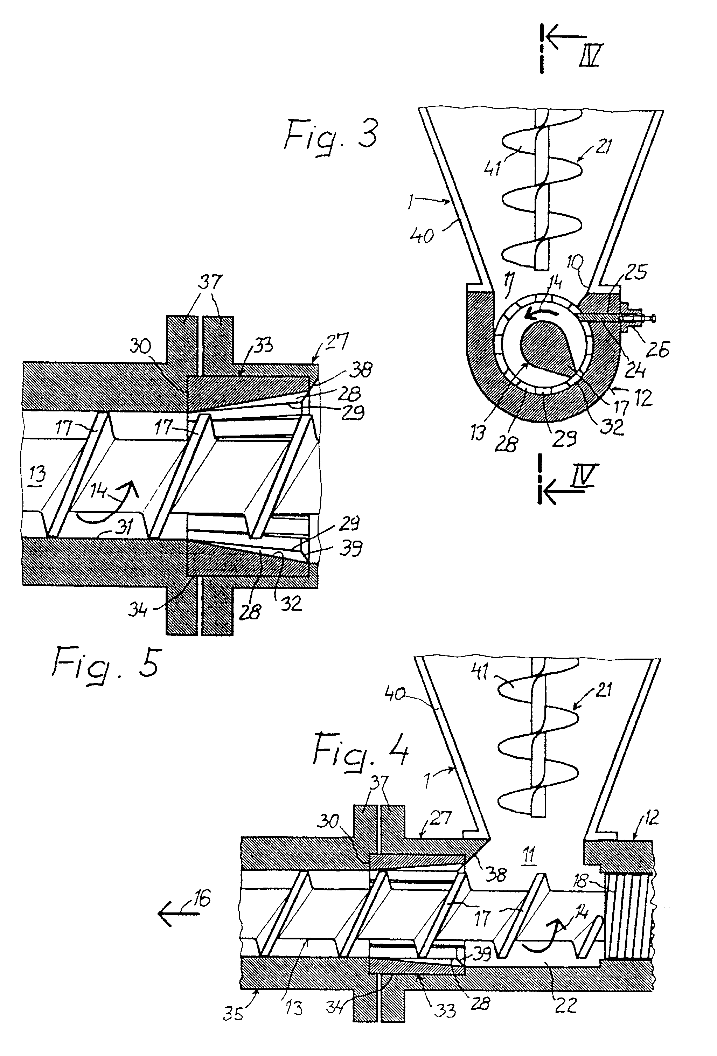

In der Zeichnung sind Ausführungsbeispiele des Erfindungsgegenstandes schematisch dargestellt. Fig.1 zeigt eine erste Ausführungsform im Vertikalschnitt nach der Linie I - I der Fig.2, welche einen Horizontalschnitt zu Fig.1 auf der Höhe der Schneckenachse zeigt. Fig.3 zeigt ein weiteres Ausführungsbeispiel im Vertikalschnitt normal zur Schneckenachse und Fig.4 ist ein Schnitt nach der Linie IV - IV der Fig.3. Fig.5 zeigt in größerem Maßstab eine etwas abgewandelte Ausführungsform einer auswechselbaren, die Nuten aufweisenden Büchse.

Bei der Ausführungsform nach den Fig.1 und 2 ist ein Behälter 1 für die Aufnahme des zu bearbeitenden Kunststoffgutes vorgesehen, welches in der Regel aus thermoplastischen Kunststoffabfällen aller Art besteht. Der Behälter hat einen Boden 2 und Mantelwände 3. Das Kunststoffgut wird in den Behälter 1 von oben durch eine nicht dargestellte Beschickungseinrichtung eingebracht, gegebenenfalls nach einer Vorbehandlung, z.B. einer Reinigung oder einer Befreiung von groben Fremdkörpem, z.B. Steinen oder Metallteilen. Im Behälter 1 wird das Kunststoffgut durch zumindest ein umlaufendes Werkzeug 4 behandelt, welches bei dieser Ausführungsform mit auf das Kunststoffgut einwirkenden, zweckmäßig als abgewinkelte Messer ausgebildeten scharfen Arbeitskanten 5 versehen ist, sodaß bei der Rotation des Werkzeuges 4 das Kunststoffgut zerkleinert und bzw. oder gemischt wird. Eine Zerkleinerung erfolgt, wenn das Kunststoffgut in Form größerer Elemente (Folien, Flaschen usw.) anfällt, eine Mischung findet bei bereits zu Teilchen aufgearbeitetem Kunststoffgut (z.B. Granulat) statt. Zumeist findet hiebei auch eine Erwärmung des Kunststoffgutes statt, was die spätere Überführung in den plastifizierten Zustand erleichtert. Die Werkzeuge 4 sind auf einer Läuferscheibe 6 montiert, die knapp oberhalb des Bodens 2 angeordnet ist und über eine den Boden 2 durchsetzende Welle 7 von einem Motor 8 zur Umlaufbewegung in Richtung des Pfeiles 9 (Fig.2) angetrieben wird.

In der seitlichen Mantelwand 3 hat der Behälter 1 eine Austragsöffnung 10, welche - gegebenenfalls über einen kurzen Stutzen - an eine Eintrittsöffnung 11 des Gehäuses 12 einer Schnecke 13 angeschlossen ist. Die Schnecke wird durch einen nicht dargestellten Antrieb in Richtung des Pfeiles 14 zur Drehbewegung um ihre Längsachse 15 angetrieben und fördert das von ihr erfaßte Kunststoffgut in Richtung des Pfeiles 16. Ist die Schnecke 13 keine reine Förderschnecke, sondem eine zu einem Extruderkopf fördemde Schnecke, so tritt eine Plastifizierung des Kunststoffgutes auf. Die Gänge der Schnecke 13 erstrecken sich, entgegen der Förderrichtung 16 gesehen, über die Eintrittsöffnung 11 hinaus und gehen dort in ein als Dichtung wirkendes Gewinde 18 über, dessen Steigung jener der Schneckengänge 17 gleichgerichtet ist und das zweckmäßig engere Gänge hat. Die Schnecke 13 bzw. ihr Gehäuse 12 kann mit einer Heizung und bzw. oder mit einer Kühlung versehen sein, um das geförderte Kunststoffgut auf der gewünschten Temperatur halten zu können.

Die etwa rechteckige Eintrittsöffnung 11, welche an der Seitenwand des Gehäuses 12 der Schnecke 13 liegt, ist verhältnismäßig groß bemessen, sie erstreckt sich in axialer Richtung der Schnecke 13 bei der dargestellten Ausführungsform über etwa zwei Gewindegänge 17, jedenfalls zumindest über einen halben Gewindegang. Die in Achsrichtung des Behälters 1 gemessene Höhe der Eintrittsöffnung 11 ist etwa so groß wie der Durchmesser der Schneckengänge 17. Dies sichert, daß die Schnecke 13 das angelieferte Kunststoffgut in großen Mengen aus dem Behälter 1 aufnehmen kann. Das Gehäuse 12 der Schnecke 13 ist seitlich etwa tangential an die Mantelwand 3 des Behälters 1 angebaut, derart, daß - in Richtung der Schneckenachse 15 gesehen - der Umfang der Schnecke 13 etwas weiter vom Zentrum des Behälters 1 entfernt liegt als die Innenfläche der Mantelwand 3 (Fig.1), oder etwa bündig mit dieser. Die Wand des Schneckengehäuses 12 setzt sich über einen horizontalen Abschnitt zum unteren Rand 19 der Eintrittsöffnung 11 fort, an den ein gekrümmter Wandteil 20 anschließt, der zum Boden 2 des Behälters 1 führt. Der untere Rand 19 der Eintrittsöffnung 11 liegt etwa auf gleicher Höhe wie die Deckfläche der Läuferscheibe 6. Das Kunststoffgut wird daher von einer Zubringeeinrichtung 21 von der Seite zwischen die Gänge 17 der Schnecke 13 gedrückt. Diese Art der Einbringung des Kunststoffgutes in das Schneckengehäuse 12 gewährleistet eine besonders günstige Gesamtkonstruktion, worauf später noch näher eingegangen wird.

Die im Behälter 1 umlaufenden Werkzeuge 4 bilden eine Zubringeeinrichtung 21, welche das von ihr bearbeitete Kunststoffgut aus der Austragsöffnung 10 in die Eintrittsöffnung 11 eindrückt, und zwar einerseits durch die Fliehkraftwirkung des in Umlaufbewegung versetzten Kunststoffgutes, anderseits durch die spachtelartige Wirkung der Werkzeuge 4. Hiedurch ergibt sich auf das Kunststoffgut eine Stopfwirkung, so daß das jeweils nachgedrückte Kunststoffgut das jeweils voreilende Kunststoffgut in die Eintrittsöffnung 11 drückt, wobei dieser Druck eine Richtung hat, die eine in Achsrichtung der Eintrittsöffnung 11 bzw. normal auf die Achsrichtung 15 der Schnecke 13 gerichtete wesentliche Komponente hat. Dadurch wird einerseits einer Brückenbildung des Kunststoffgutes im Bereich der Eintrittsöffnung 11 entgegegengewirkt, anderseits wird stets genügend Kunststoffgut zwischen die einzelnen Schneckengänge 17 gedrückt und dadurch die Schnecke 13 laufend ausreichend mit zu fördemdem Kunststoffgut versorgt, auch wenn dieses in sehr loser Form vorliegt, z.B. in Form von Flocken, Folien, Schnitzeln usw. Um die Erfassung des in das Schneckengehäuse 12 eingetretenen Kunststoffgutes noch weiter zu verbessem, ist zusätzlich zu den Schneckengängen 17 ein Freiraum im Gehäuse 12 vorgesehen, welcher von einer taschenartigen Erweiterung 22 des Schneckengehäuses 12 gebildet ist. Diese Erweiterung 22 hat über große Teile des Umfanges des Schneckengehäuses 12 die Gestalt eines Hohlzylinders und erstreckt sich in axialer Richtung der Schnecke 13 über zumindest einen Schneckengang 17, im dargestellten Ausführungsbeispiel über etwa 2,5 Schneckengänge (Fig.2). Die Erweiterung 22 steht mit der Eintrittsöffnung 11 in unmittelbarer Verbindung. Die in Umfangsrichtung der Schnecke 13 gemessene Breite der Erweiterung 22 ist über ihre Länge vorzugsweise konstant, so daß also die Tiefe der von der Erweiterung 22 gebildeten Tasche überall im wesentlichen gleich ist. Die Erweiterung 22 schließt an das Dichtungsgewinde 18 unmittelbar an und erstreckt sich in axialer Richtung der Schnecke 13 nach beiden Seiten über die Eintrittsöffnung 11 hinaus. Die in radialer Richtung der Schnecke 13 gemessene Tiefe der Erweiterung 22 beträgt etwa 5 bis 10 % des Durchmessers der Schnecke 13. Am unteren Rand 19 der Eintrittsöffnung 11 geht die Erweiterung 22 stufenlos in die Eintrittsöffnung 11 über (Fig.1), sodaß dort sich im wesentlichen eine horizontale Fortsetzung der Deckfläche der Läuferscheibe 6 ergibt. Am oberen Rand der Eintrittsöffnung 11, das ist jener Rand der Eintrittsöffnung 11, an welchem die Drehrichtung (Pfeil 14) der Schnecke 13 zum Behälter 1 hin gerichtet ist, hat die Erweiterung hingegen einen verstellbaren Wandteil 23, der von einer Rippe 24 gebildet ist, die in einer Schlitzführung 25 des Schneckengehäuses 12 geführt und mittels Verstelltrieben 26, z.B. Stellschrauben, auf die Schnecke 13 zu bzw. von ihr weg stufenlos verstellbar ist. Der Verstellbereich umfaßt zweckmäßig die gesamte Tiefe der Tasche 22. Die der Schnecke 13 gegenüberliegende Stirnfläche der Rippe 24 ist zweckmäßig entsprechend dem Umfang der Erweiterung 22 geformt. In der vollkommen zurückgezogenen Stellung bildet die Rippe 24 daher eine glatte Fortsetzung der Außenwand der taschenartigen Erweiterung 22, so daß die Rippe 24 für das von der Schnecke 13 erfaßte Kunststoffgut keinen Widerstand bietet. In der am weitesten gegen die Schnecke 13 zu vorgeschobenen Stellung liegt die Rippe 24 mit ihrer Stirnfläche hingegen am Umfang der Gänge 17 der Schnecke 13 an und bildet daher einen erheblichen Widerstand für das von der Schnecke 13 erfaßte Kunststoffgut. In der letzteren Stellung der Rippe 24 schließt diese Rippe 24 die taschenartige Erweiterung 22 zumindest teilweise gegen den Innenraum des Behälters 1 ab, sodaß das in der taschenartigen Erweiterung 22 befindliche Kunststoffgut laufend zwischen die Gänge 17 der Schnecke 13 gedrückt wird und daher mit der Schnecke 13 nicht mitlaufen kann, sondem in Achsrichtung der Schnecke weitertransportiert wird. In der zurückgezogenen Stellung der Rippe 24 hingegen wird ein Teil des von der Schnecke 13 in der Eintrittsöffnung 11 erfaßten Kunststoffgutes wieder in die Eintrittsöffnung 11 zurückbefördert, so daß die Förderung der Schnecke 13 in Richtung des Pfeiles 16 verringert wird. Durch wählbare Zwischenstellungen der Rippe 24 läßt sich der Förderwirkungsgrad der Schnecke 13 zwischen einem Maximum und einem Minimum nach Belieben einstellen und daher an die vorliegenden Gegebenheiten anpassen. Dies ist von Vorteil insbesondere dann, wenn das Kunststoffgut wechselnde Beschaffenheit hat, z.B. unterschiedliche Dichte, da auf diese Weise Überlastungen der Schnecke 13 und ihres Antriebes vermieden werden.

Unmittelbar an die taschenartige Erweiterung 22 schließt ein Bereich 27 des Schneckengehäuses 12 an, welcher an seiner Innenmantelfläche mehrere Nuten 28 aufweist, die durch von der Mantelwand dieses Bereiches 27 vorstehende starre und unbewegliche Rippen 29 voneinander getrennt sind. Die Nuten 28 und die Rippen 29 verlaufen beim dargestellten Ausführungsbeispiel in Richtung 16 der Schneckenachse 15, können jedoch auch schraubenlinienartig um diese Achse 15 gewunden sein, haben jedoch immer eine wesentliche Komponente ihrer Längsrichtung, die in Richtung der Schneckenachse 15 zeigt. Die Rippen 29 haben eine derartige Höhe, daß sie mit ihren der Schnecke 13 zugewendeten Mantelflächen am Umfang der Schneckengänge 17 anliegen und daher gleichsam eine Abstützung für die Schnecke 13 im Bereich 27 bilden. Die Tiefe der Nuten 28 verringert sich von der taschenartigen Erweiterung 22 weg, vorzugsweise kontinuierlich und stufenlos. Die Anordnung ist beim dargestellten Ausführungsbeispiel so getroffen, daß die Nuten 28 an ihrem Ende, in welches der geförderte Kunststoff eintritt, eine Tiefe haben, die gleich ist der Tiefe der Erweiterung 22, so daß am Übergang von der Erweiterung 22 in die Nuten 28 keine Stufe entsteht, jedoch bildet jede Rippe 29 eine solche Stufe. Am anderen Stimende des Bereiches 27 gehen die Nuten 28 sanft in den Schneckenaußendurchmesser über, das heißt, daß dort der Boden der Nuten 28 den Scheitel der Rippen 29 erreicht hat. An diesem Stimende 30 (Fig.2) gehen daher die Nuten 28 und die Rippen 29, zweckmäßig stufenlos, in die zylindrische Mantelwand 31 des Schneckengehäuses 12 über.

Zweckmäßig verlaufen die Seitenwände der Nuten 28 so, daß sich auf das von der Schnecke 13 transportierte Kunststoffgut eine einfangende Wirkung ergibt. Vorzugsweise ist hiezu jene Seitenwand der jeweiligen Nut 28, welche - gesehen in Umlaufrichtung der Schnecke 13 (Pfeil 14) - nachfolgt, entgegen der Umlaufrichtung der Schnecke geneigt. Die zwischen den Nuten 28 liegenden Rippen 29 haben daher etwa trapezförmigen Querschnitt. Die Nuten 28 müssen nicht alle gleich breit sein, wenngleich dies die Herstellung erleichtert. Das gleiche gilt für die Rippen 29. Zweckmäßig verhält sich das in Umlaufrichtung der Schnecke 13 (Pfeil 14) gemessene Verhältnis der Breite der Nuten 28 zur Breite der Rippen 29 wie 0,5:1 bis 2:1. Im dargestellten Ausführungsbeispiel (Fig.1) beträgt dieses Verhältnis etwa 1:1. Der Boden 32 jeder Nut 28 kann nach einer Kegelmantelfläche geformt sein, aber auch ein ebener Boden 32 ist möglich.

Aus Gründen der leichteren Herstellung sind die Nuten 28 und die Rippen 29 wesentlich kürzer als die in Axialrichtung der Schnecke 13 gemessene Länge der Erweiterung 22 und auch kürzer als die in gleicher Richtung gemessene Ausdehnung der Eintrittsöffnung 11. Zweckmäßig verhalten sich die in der erwähnten Richtung gemessenen Längen der Erweiterung 22 zu jener der Nuten 28 wie 3:1 bis 1,5:1, zweckmäßig etwa 2:1. Besonders vorteilhaft ist es hiebei, die Nuten 28 in einem gesonderten Bauteil des Schneckengehäuses 12 vorzusehen, welcher als leicht auswechselbare Büchse 32 (Fig.2) ausgebildet ist. Diese Büchse 33 ist in eine zylindrische Ausnehmung 34 des Schneckengehäuses 12 eingesetzt und darin unverdrehbar gehalten, z.B. mittels eines nicht dargestellten Keiles od.dgl. Um diese Büchse 33, welche einen Verschleißteil bildet und zweckmäßig aus verschleißfestem Material, insbesondere Hartmetall, besteht, leicht auswechseln zu können, sitzt die Büchse 33 zwischen zwei Abschnitten 35,36 des Schneckengehäuses 12, die miteinander an Flanschen 37 verschraubt sind. Die erwähnte Verdrehungssicherung der Büchse 33 kann auch dadurch erzielt werden, daß sie an ihrem abstromseitig angeordneten Stimende mit Vorsprüngen, z.B. einer Verzahnung, Klauen od.dgl., versehen ist, die in entsprechende Ausnehmungen des Schneckengehäuseabschnittes 35 eingreifen. Die verhältmäßig kurze axiale Länge der Büchse 33 ermöglicht eine einfache Herstellung derselben, so daß dieser hoch beanspruchte Teil kostengünstig ausgewechselt werden kann.

Der abstromseitig angeordnete Rand der Eintrittsöffnung 11 ist als Schrägfläche 38 (Fig.2), vorzugsweise konisch, ausgebildet und geht in das Stimende der Rippen 29 bzw. der Nuten 28 sanft über. Wie Fig.2 zeigt, kann das zustromseitige Stimende 39 der Rippen 29 abgeschrägt sein, vorzugsweise konisch, wobei diese Abschrägung fluchtend mit der Schrägfläche 38 der Eintrittsöffnung 11 verlaufen kann. Dies begünstigt das Einfangen des in der taschenartigen Erweiterung 22 befindlichen Kunststoffgutes zwecks Förderung durch die Schnecke 13 in Richtung des Pfeiles 16.

Im Betrieb wird bei der Umlaufbewegung der Werkzeuge 4 das Kunststoffgut durch die Fliehkraftwirkung, unterstützt von der spachtelartigen Wirkung der abgewinkelten Werkzeuge 4, in die Austrittsöffnung 10 des Behälters 1 und durch diese hindurch in die Eintrittsöffnung 11 des Schneckengehäuses 12 gedrückt. Das so eingestopfte Kunststoffgut gelangt zwischen die einzelnen Gänge 17 der Schnecke 13 und in die taschenartige Erweiterung 22 und füllt diese Freiräume. Bei der Drehung der Schnecke 13 wird das Kunststoffgut mitgenommen und in die Nuten 28 der Büchse 33 eingedrückt. Je nachdem, wie weit die Rippe 24 vom Boden der Erweiterung 22 vorragt, wird diese Eindrückung des Kunststoffgutes in die Nuten 28 unterstützt. Durch die sich veningemde Tiefe der Nuten 28 und durch die Schubwirkung des jeweils nachgelieferten Kunststoffgutes wird dieses allmählich zwischen die Gänge 17 der Schnecke 13 gedrückt, bis es sich im Abschnitt 35 des Schneckengehäuses 12 zur Gänze zwischen den Schneckengängen 17 befindet. Durch diese Eindrückung des Kunststoffgutes hat die Schnecke 13 einen guten Förderwirkungsgrad, welcher bis an die Grenze der Belastbarkeit herangeführt werden kann. Stellt sich heraus, daß diese Grenze schon nahe ist, so kann der Förderwirkungsgrad der Schnecke 13 durch Zurückziehen der Rippe 24 veningert werden, da dann ein Teil des von der Schnecke in der Erweiterung 22 im Sinne des Pfeiles 14 mitgenommenen Kunststoffgutes wieder zurück in die Eintrittsöffnung 11 gefördert wird. Um besonders wirksam zu sein, erstreckt sich die in Axialrichtung der Schnecke 13 gemessene Länge der Rippe 24 zumindest über die in gleicher Richtung gemessene Weite der Eintrittsöffnung 11 (Fig.2).

Um den Stopfdruck des Kunststoffmateriales und auch durch Feststoffe ausgeübte Biegebeanspruchungen auf die Schnecke 13 besser aufnehmen zu können, kann in der taschenartigen Erweiterung 22 zumindest eine weitere Längsrippe vorgesehen sein, die eine Abstützung für die Schnecke 13 bildet und gegebenenfalls ebenso verstellbar sein kann wie die Rippe 24. Vorzuziehen ist jedoch nur eine einzige taschenartige Erweiterung 22, da dies in der Regel ausreicht und die Herstellung des Einzugsteiles des Schneckengehäuses 12 vereinfacht.

Der verstellbare Wandteil 23 muß nicht unbedingt von einer Rippe 24 gebildet sein, statt dessen kann auch ein Wandteil 23 vorgesehen sein, der in Bezug auf die restliche Wand der taschenartigen Erweiterung 22 schwenkbar ist, und zwar so, daß die Schwenkstelle zulaufseitig liegt. Auf diese Weise kann der von der Schnecke 13 mitgenommene Kunststoff allmählich in die Schneckengänge eingedrückt werden und nicht so plötzlich, wie dies die Rippe 24 tut. Konstruktiv ist jedoch die Rippe 24 wesentlich einfacher, so daß diese Ausführungsform bevorzugt ist.

Die Ausführungsvariante nach den Fig.3 bis 5 unterscheidet sich von jener nach den Fig.1 und 2 im wesentlichen lediglich durch die Art der Einbringung des Kunststoffgutes in die Eintrittsöffnung 11 des Schneckengehäuses 12. Hiezu ist an die nach oben gerichtete Eintrittsöffnung 11 des Schneckengehäuses 12 ein den Behälter 1 für das Kunststoffgut bildender Trichter 40 angeschlossen, in welchem als Zubringeeinrichtung 21 eine Schnecke 41 angeordnet ist, welche bei ihrer Umlaufbewegung die nötige Stopfwirkung auf das im Trichter 40 befindliche Kunststoffgut ausübt. Die in axialer Richtung der Schnecke 13 gemessene Weite der Eintrittsöffnung 11 ist bei dieser Ausführungsform 11 nur etwas größer als die Schneckenganghöhe, die in gleicher Richtung gemessene Länge der Büchse 33 ist etwa gleich groß wie die Weite der Eintrittsöffnung 11. Die Büchse 33 kann auch, wie Fig.5 zeigt, noch kürzer ausgebildet werden, dann ist die Steilheit des nach einer Kegelmantelfläche geformten Nutenbodens 32 größer.

Der tangentiale Anschluß des Schneckengehäuses 12 an den Behälter 1 ermöglicht es, den Antrieb für die Schnecke 13 am einen Stimende derselben anzuordnen und einen Extruderkopf od.dgl. am anderen Stimende, so daß das Kunststoffmaterial ohne Umlenkung mittels der Schnecke 13 extrudiert werden kann. Dies sichert einen besonders guten Wirkungsgrad.

## Patentansprüche

1. Vorrichtung zum Aufbereiten thermoplastischen Kunststoffgutes, mit einem Behälter (1) zur Aufnahme des zu bearbeitenden Kunststoffgutes, in welchem Behälter (1) eine Einrichtung mit zumindest einem umlaufenden Werkzeug (4) vorhanden ist, die das Kunststoffgut in Richtung zu einer Austragsöffnung (10) des Behälters (1) derart fördert, daß auf das Kunststoffgut eine in Achsrichtung dieser Austragsöffnung (10) gerichtete, durch jeweils nachgedrücktes Kunststoffgut übertragene Stopfkraftkomponente ausgeübt wird, welche Austragsöffnung (10) zu einer in der Seitenwand des Gehäuses (12) einer Schnecke (13) angeordneten Eintrittsöffnung (11) für das Kunststoffgut führt, sodaß das Kunststoffgut von der Seite zwischen die Gänge (17) der Schnecke (13) gedrückt.wird, wobei an der Innenmantelfläche des Gehäuses (12) der Schnecke (13) im Bereich der Eintrittsöffnung (11) eine, vorzugsweise taschenartige, Erweiterung (22) vorgesehen ist, die einen zusätzlichen Freiraum zur Aufnahme von Kunststoffgut bildet, der durch das eingestopfte Kunststoffgut gefüllt wird, welche Erweiterung (22) an jenem Rand der Eintrittsöffnung (11), an welchem die Drehrichtung der Schnecke (13) zum Behälter (1) gerichtet ist, durch einen verstellbaren Wandteil (23) begrenzt ist, durch welchen die Erweiterung (22 zumindest teilweise gegen den Behälter (1) abschließbar ist, und wobei die Erweiterung (22) zumindest in einem an sie in Förderrichtung der Schnecke (13) anschließenden Bereich (27) des Schneckengehäuses (12) in mehrere Nuten (28) übergeht, die in diesem Bereich (27) eine sich bis zum Schneckendurchmesser verringernde Tiefe haben und in diesem Bereich (27) durch relativ zur Mantelwand der Erweiterung (22) des Schneckengehäuses (12) gegen die Schnecke (13) vorstehende starre Rippen (29) voneinander getrennt sind, und wobei jede dieser Nuten (28) für das Kunststoffgut einen Freiraum bildet, dessen Längsrichtung eine in Achsrichtung der Schnecke (13) verlaufende wesentliche Komponente hat.

2. Vorrichtung nach Anspruch 1, dadurch gekennzeichnet, daß sich die Rippen (29) in radialer Richtung des Schneckengehäuses (12) bis zum Umfang der Schneckengänge (17) erstrecken.

3. Vorrichtung nach Anspruch 1 oder 2, dadurch gekennzeichnet, daß die Nuten (28) nur in einem an die Eintrittsöffnung (11) anschließenden Bereich (27) des Schneckengehäuses (12) vorgesehen sind.

4. Vorrichtung nach Anspruch 1, 2 oder 3, dadurch gekennzeichnet, daß im Bereich der Eintrittsöffnung (11) nur eine einzige taschenartige Erweiterung (22), vorzugsweise mit konstanter Tiefe, vorgesehen ist, die sich über den gesamten Umfang der Schnecke (13) mit Ausnahme der Eintrittsöffnung (11) erstreckt und sich in mehreren Nuten (28) fortsetzt.

5. Vorrichtung nach einem der Ansprüche 1, bis 4, dadurch gekennzeichnet, daß die Tiefe der Nuten (28) in Förderrichtung der Schnecke (13) kontinuierlich abnimmt, wobei vorzugsweise der Boden (32) zumindest einer Nut (28) nach einer Kegelmantelfläche geformt ist.

6. Vorrichtung nach einem der Ansprüche 1 bis 5, dadurch gekennzeichnet, daß die in Axialrichtung der Schnecke (13) gemessene Länge der Nuten (28) kürzer ist als die in gleicher Richtung gemessene Weite der Eintrittsöffnung (11), wobei vorzugsweise die so gemessene Nutenlänge das 0,5-fache bis 3-fache des Schneckendurchmessers beträgt.

7. Vorrichtung nach einem der Ansprüche 1 bis 6, dadurch gekennzeichnet, daß die in Umfangsrichtung der Schnecke (13) gemessene Breite der Nuten (28) gleich groß ist.

8. Vorrichtung nach einem der Ansprüche 1 bis 7, dadurch gekennzeichnet, daß die in Umfangsrichtung der Schnecke (13) gemessene Breite der Rippen (29) gleich groß ist.

9. Vorrichtung nach einem der Ansprüche 1 bis 8, dadurch gekennzeichnet, daß die in Umfangsrichtung der Schnecke (13) gemessene Breite der Nuten (28) sich zur in gleicher Richtung gemessenen Breite der Rippen (29) wie 0,5:1 bis 2:1, vorzugsweise etwa 1:1 verhält.

10. Vorrichtung nach einem der Ansprüche 1 bis 9, dadurch gekennzeichnet, daß die Rippen (29) und Nuten (28) in Längsrichtung der Schnecke (13) verlaufen.

11. Vorrichtung nach einem der Ansprüche 1 bis 10, dadurch gekennzeichnet, daß die Nuten (28) in einer einen gesonderten Abschnitt (27) des Schneckengehäuses (12) bildenden Büchse (33) vorgesehen sind, welche unverdrehbar, vorzugsweise leicht auswechselbar, in das restliche Schneckengehäuse (12) eingebaut ist.

12. Vorrichtung nach Anspruch 11, dadurch gekennzeichnet, daß die Büchse (33) aus verschleißfestem Material besteht.

13. Vorrichtung nach einem der Ansprüche 1 bis 12, dadurch gekennzeichnet, daß die Erweiterung (22) in Umfangsrichtung der Schnecke (13) konstante Tiefe hat.

14. Vorrichtung nach einem der Ansprüche 1 bis 13, dadurch gekennzeichnet, daß der Rand der Eintrittsöffnung (11) über eine, vorzugsweise konische, Schrägfläche (38) in den an die Erweiterung (22) anschließenden Bereich des Schneckengehäuses (12) übergeht.

15. Vorrichtung nach einem der Ansprüche 1 bis 14, dadurch gekennzeichnet, daß der verstellbare Wandteil von einer Rippe (24) gebildet ist, deren Verstellbereich so groß ist wie die Tiefe der taschenartigen Erweiterung (22).

## Claims

1. A device for processing thermoplastic plastics material, comprising a container (1) for receiving the plastics material to be treated, which container (1) has a device with at least one rotating tool (4), the said device conveying the plastics material in the direction of a discharge opening (10) of the container (1) in such a way that a tamping-force component - directed in the axial direction of the said discharge opening (10) and transmitted thereto by plastics material subsequently being pressed in - is exerted on the plastics material, the discharge opening (10) leading to an inlet opening (11) for the plastics material situated in the side wall of the housing (12) of a screw (13), so that the plastics material is pressed from the side between the threads (17) of the screw (13), wherein the interior surface of the housing (12) of the screw (13) in the area of the inlet opening (11) has provided therein a preferably pocket-like enlargement (22) which forms an additional free space for receiving plastics material, the said free space being filled by the tamped-in plastics material and the said enlargement (22) being bounded by an adjustable wall piece (23) on that edge of the inlet opening (11) on which the direction of rotation of the screw (13) is directed towards the container (1), the said wall piece (23) allowing the enlargement (22) to be at least partially closed off from the container (1), and wherein the enlargement (22) passes into a plurality of grooves (28) in least in an area (27) of the screw housing (12) adjoining it in the conveying direction of the screw (13), the said grooves (28) being of a depth which decreases to the screw diameter in this area (27) and being separated from one another in this area (27) by rigid ribs (29) which project towards the screw (13) relative to the wall of the enlargement (22) of the screw housing (12), and wherein each of the said grooves (28) forms a free space for the plastics material, the longitudinal direction of the said free space having a substantial component which extends in the axial direction of the screw (13).

2. A device according to Claim 1, **characterized in that** the ribs (29) extend in the radial direction of the screw housing (12) as far as the periphery of the screw threads (17).

3. A device according to Claim 1 or 2, **characterized in that** the grooves (28) are provided only in an area (27) of the screw housing (12) adjoining the inlet opening (11).

4. A device according to Claim 1, 2 or 3, **characterized in that** in the area of the inlet opening (11) only one single pocket-like enlargement (22), preferably with a constant depth, is provided, which extends over the entire periphery of the screw (13) with the exception of the inlet opening (11) and which continues in a plurality of grooves (28).

5. A device according to one of Claims 1 to 4, **characterized in that** the depth of the grooves (28) continuously decreases in the coveying direction of the screw (13), wherein the base (32) of at least one groove (28) is preferably shaped like the surface of the envelope of a cone.

6. A device according to one of Claims 1 to 5, **characterized in that** the length of the grooves (28) as measured in the axial direction of the screw (13) is shorter than the width of the inlet opening (11) as measured in the same direction, wherein the groove length measured in this way is preferably from 0.5 to 3 times the screw diameter.

7. A device according to one of Claims 1 to 6, **characterized in that** the grooves (28) have the same width, as measured in the peripheral direction of the screw (13).

8. A device according to one of Claims 1 to 7, **characterized in that** the ribs (29) have the same width, as measured in the peripheral direction of the screw (13).

9. A device according to one of Claims 1 to 8, **characterized in that** the ratio of the width of the grooves (28), as measured in the peripheral direction of the screw (13), to the width of the ribs (29), as measured in the same direction. is from 0·5 : 1 to 2 : 1, preferably about 1:1.

10. A device according to one of Claims 1 to 9, **characterized in that** the ribs (29) and the grooves (28) extend in the longitudinal direction of the screw (13).

11. A device according to one of Claims 1 to 10, **characterized in that** the grooves (28) are provided in a sleeve (33) which forms a separate section (27) of the screw housing (12) and which is fitted in the remainder of the screw housing (12) in such a way that it cannot turn and preferably such that it is easy to exchange.

12. A device according to Claim 11, **characterized in that** the sleeve (33) is made of wear-resistant material.

13. A device according to one of Claims 1 to 12, **characterized in that** the enlargement (22) has a constant depth in the peripheral direction of the screw (13).

14. A device according to one of Claims 1 to 13, **characterized in that** the edge of the inlet opening (11) passes by way of a preferably conical inclined surface (38) into the area of the screw housing (12) adjoining the enlargement (22).

15. A device according to one of Claims 1 to 14, **characterized in that** the adjustable wall piece is formed by a rib (24), the adjustment range of which is as large as the depth of the pocket-like enlargement (22).

## Revendications

1. Dispositif de préparation de matières thermoplastiques pourvu d'un réservoir (1) d'admission des matières thermoplastiques à préparer, dans lequel est agencé un dispositif comprenant au moins un outil rotatif (4) qui refoule la matière plastique en direction d'une ouverture de déversement (10) dudit réservoir (1) de telle façon qu'il s'exerce, sur la matière plastique, une composante de force de remplissage orientée axialement par rapport à ladite ouverture de déversement (10) et transmise par la matière plastique refoulée, ladite ouverture de déversement (10) débouchant sur un orifice d'admission (11) de la matière plastique ménagé dans la paroi latérale du carter (12) d'une vis sans fin (13) de telle sorte que la matière plastique est pressée latéralement entre les filets (17) de la vis sans fin (13), un évidement (22) affectant de préférence une forme de poche et ménagé dans la surface latérale interne du carter (12) de la vis sans fin (13) étant prévu à proximité de l'orifice d'admission (11), ledit évidement (22) formant un espace libre supplémentaire pour recevoir de la matière plastique, lequel espace libre est rempli par la matière plastique introduite, ledit évidement (22) étant délimité, à l'extrémité de l'orifice d'admission (11) au niveau de laquelle le sens de rotation de la vis sans fin (13) est en direction du réservoir (1), par un élément de paroi (23) mobile, lequel élément de paroi permet audit évidement (22) d'être obturé au moins partiellement par rapport au réservoir (1), et ledit évidement (22) se transformant, dans au moins une zone (27) du carter de vis sans fin (12) lui étant contiguë, dans le sens d'alimentation de ladite vis sans fin (13), en plusieurs rainures (28), lesquelles, dans ladite zone (27), ont une profondeur se réduisant jusqu'à atteindre le diamètre de la vis sans fin et, dans ladite zone (27), sont séparées les unes des autres par des nervures (29) rigides dépassant de l'enveloppe extérieure de l'évidement (22) du carter de vis sans fin (12) en direction de la vis sans fin (13), et chacune de ces rainures (28) formant un espace libre pour la matière plastique, dont la dimension longitudinale présente une composante essentielle orientée dans la direction axiale de la vis sans fin (13).

2. Dispositif selon la revendication 1, caractérisé en ce que les nervures (29) s'étendent, dans la direction radiale du carter de vis sans fin (12), jusqu'à la périphérie des filets (17) de la vis sans fin.

3. Dispositif selon la revendication 1 ou 2, caractérisé en ce que les rainures (28) ne sont prévues que dans une zone (27) du carter de vis sans fin (12) contiguë à l'orifice d'admission (11).

4. Dispositif selon la revendication 1, 2 ou 3, caractérisé en ce qu'il est prévu, dans la zone de l'orifice d'admission (11), un seul évidement (22) en forme de poche et d'une profondeur de préférence constante, lequel s'étend sur la totalité de la circonférence de la vis sans fin (13) à l'exception de l'orifice d'admission (11), et se prolonge sous la forme de plusieurs rainures.

5. Dispositif selon l'une des revendications 1 à 4, caractérisé en ce que la profondeur des rainures (28) diminue de façon continue dans le sens d'alimentation de la vis sans fin (13), le fond (32) d'au moins une rainure (28) affectant, de préférence, la forme d'une surface latérale d'un cône.

6. Dispositif selon l'une des revendications 1 à 5, caractérisé en ce que la longueur des rainures (28), mesurée dans la direction axiale de la vis sans fin (13), est inférieure à la largeur de l'orifice d'admission (11), mesurée dans la même direction, la longueur des rainures ainsi mesurée atteignant de préférence 0,5 à 3 fois le diamètre de la vis sans fin.

7. Dispositif selon l'une des revendications 1 à 6, caractérisé en ce que les rainures (28) présentent une largeur identique, mesurée dans la direction périphérique de la vis sans fin (13).

8. Dispositif selon l'une des revendications 1 à 7, caractérisé en ce que les nervures (29) présentent une largeur identique, mesurée dans la direction périphérique de la vis sans fin (13).

9. Dispositif selon l'une des revendications 1 à 8, caractérisé en ce que le rapport de la largeur des rainures (28) mesurée dans la direction périphérique de la vis sans fin (13), sur la largeur des nervures (29) mesurée dans la même direction, est compris entre 0,5:1 et 2:1, et est de préférence égal à environ 1:1.

10. Dispositif selon l'une des revendications 1 à 9, caractérisé en ce que les nervures (29) et les rainures (28) s'étendent dans la direction axiale de la vis sans fin (13).

11. Dispositif selon l'une des revendications 1 à 10, caractérisé en ce que les rainures (28) sont prévues dans une douille (33) formant une portion séparée (27) du carter de vis sans fin (12), laquelle douille est intégrée, de façon fixe en rotation et de préférence facilement interchangeable, dans la partie restante du carter de vis sans fin (12).

12. Dispositif selon la revendication 11, caractérisé en ce que la douille (33) est fabriquée dans un matériau résistant à l'usure.

13. Dispositif selon l'une des revendication 1 à 12, caractérisé en ce que l'évidement (22) a une profondeur constante dans la direction périphérique de la vis sans fin (13).

14. Dispositif selon l'une des revendications 1 à 13, caractérisé en ce que le bord de l'orifice d'admission (11) se prolonge via une surface oblique (38), de préférence conique, en la zone du carter de vis sans fin (12) contiguë à l'évidement (22).

15. Dispositif selon l'une des revendications 1 à 14, caractérisé en ce que l'élément de paroi mobile est formé par une nervure (24) dont la course de réglage est égale à la profondeur de l'évidement (22) en forme de poche.
